# EUROPEAN PATENT SPECIFICATION

(11) **EP 1 082 835 B1**
(45) Date of publication and mention of the grant of the patent: **11.04.2007**
(21) Application number: 99940725.7
(22) Date of filing: 20.05.1999
(51) Int. Cl.: H04L 7/033

(54) **METHOD RELATED TO CLOCK DELAY COMPENSATION**
VERFAHREN ZUM TAKTVERZÖGERUNGSAUSGLEICH
PROCEDE RELATIF A LA COMPENSATION DU RETARD D'HOROLOGE

(30) Priority: 25.05.1998 NO 982361
(43) Date of publication of application: 14.03.2001
(73) Proprietor: TELEFONAKTIEBOLAGET LM ERICSSON (publ), 164 83 Stockholm (SE)
(72) Inventor: SCHUMANN-OLSEN, Reidar, N-3400 Lier (NO)
(74) Representative: Herbjörnsen, Rut
(86) International application number: PCT/NO1999/000160
(87) International publication number: WO 1999/062219

(56) References cited:
- EP-A1- 0 602 898
- EP-A2- 0 603 600
- US-A- 4 916 717
- US-A- 5 115 455
- US-A- 5 245 637
- US-A- 5 566 215
- US-A- 5 568 526

## Description

### Field of the invention

The present invention concerns a method related to clock delay compensation, especially related to connection of data communication equipment (DCE) to modems and other types of data transmission equipment (DTE).

The present invention also relates to data transmission interfaces.

More particularly, the present invention relates to a method as stated in the preamble of the enclosed patent claim 1.

### Background of the invention

### THE PROBLEM AREA

For connection and data communication equipment (DCE) to modems and other types of data transmission equipment (DTE) there are standardised several interfaces. These interfaces define data and clocking as well as control lines. Typical interfaces mentioned are RS232 (V.24), V.35, V.36 and X.21. The electrical interfaces for the interface are defined in V.10, V.11 and V.28.

Basically, these interfaces were defined according to ITU rec. X21 which limits the bitrate to 64 kbit/s.

With use of the electrical interfaces V.11 ranges of several hundreds of meters of cable can be used. The interface V.35, V.36 and X.21 define this electrical interface for clock and date.

In connection with the use of this interface for bitrates higher than 64 kbit/s, by now up to 2 Mbit/s one problem has arised, caused by the pulse delay on a long cable becoming comparable with the period of the clock.

In the case of a codirectional interface, that is clock and data have the same source, the delay is not a problem, but in the case where a contradirectional interface is used, like the X.21 interface or use of DCE-clock (114) on V.35/V.36, there will be a problem of detecting the data signal with the DCE-clock. This is because the data signals have an arbitrarily unknown delay through the cable.

### KNOWN SOLUTION

To overcome this problem, the DCEs are equipped with a manual option of changing the phase of the detecting clock, thus avoiding sampling of data close to the transitions. An extra not standardised X-circuit on the X.21 interface is also used.

### PROBLEMS WITH KNOWN SOLUTIONS

Problems with known solutions are that the cable delay is unknown and the manual selection of inverted or not inverted clock is done on the respective site installation by trial. The X-circuit is not standardised and is by customers not recommended.

### Further prior art

US 5 568 526 (Ferraiolo et al.) relates to a self-timed interface (STI) in which a clock signal clocks bit serial data onto a parallel, electrically conductive bus and the clock signal is transmitted on a separate line of the bus. The received data on each line of the bus is individually phase aligned with the clock signal. The received clock signal is used to define boundary edges of a data bit cell individually for each line, and the data on each line of the bus is individually phase adjusted so that, for example, a data transition position is in the centre of the cell. Data are read into a buffer storage with the received clock and are read out with an internal clock in the interface.

EP 0 602 898-A1 (Kawada/Fujitsu Limited) relates to a method and apparatus for synchronising transmission of modem. The phase difference between internal and external data/clock signals are equalised, by controlling the internal timing signal so that the measured phase difference will approach a reference phase difference.

EP 0 603 600-A3 (Klimek et al./Siemens Rolm Communications Inc.) relates to path delay compensation in an open-loop system, the signal paths being compensated by internal clocks in the units of the system. The compensation is based on a synchronising signal.

US 4 916 717 (Sackman, III et al.) relates to clock synchronisation of a master clock following data messages received from a remote data transmitter having the same clock frequency, but which is phase shifted due to delays in the signal paths.

Further publications related to this technical field are NO patent applications 924247 (Coquerel/Institut Français du Petrole), 942171 (Hedberg/Ericsson), 961421 (Buhrgard/Ericsson) and 961454 (Buhrgard/Ericsson).

US 5 115 455 describes a method for stabilized data transmission. This invention only solves delay problems with clock and data signals in the same direction (DCE-DTE). It is not a general solution on the 103/T (X.21 terminology) detection problem which includes detection in a contra-directional interface.

US 5 566 215 describes a method for restoring a clock signal by punctuating the transmission of the received signals. This is a known technology in signal detection. It depends on analysing a number of samples before resynchronizing, and is therefore said not to be instantaneous.

### Objects of the invention

A main object of the present invention is to suggest a solution which automatically compensates for the cable delay and makes sure that data is always clocked in the middle of the symbol.

Another object of the present invention is to present a method wherein existing equipment is utilised in a far more expedite manner.

Still another object of the present invention is to provide a method by which time delay compensation is independent of the length of the transmission cable.

### Brief summary of the invention

The above objects are achieved by a method as stated in the preamble, which according to the present invention is characterised by the features as stated in the characterising clause of the enclosed patent claim 1.

More specifically the present invention suggests to use the transition on the transmitted data (T-circuit on X.21) as a reference for adjusting (resetting) a counter which controls the data sampling.

Further features and advantages of the present invention will appear from the following detailed description of embodiments, taken in conjunction with the enclosed drawings, as well as from the appending patent claims.

As for the feature characteristics of the invention, reference is made to the claims.

### Disclosure of the drawings

Fig. 1 is a schematical diagram illustrated an example of a data transmission with related interfaces, wherein an embodiment of the present invention can be implemented.

Fig. 2 illustrates time diagrams related to transmitted data, signal element timing and received data, all in accordance with an appropriate embodiment of the present invention.

### Detailed description of embodiments

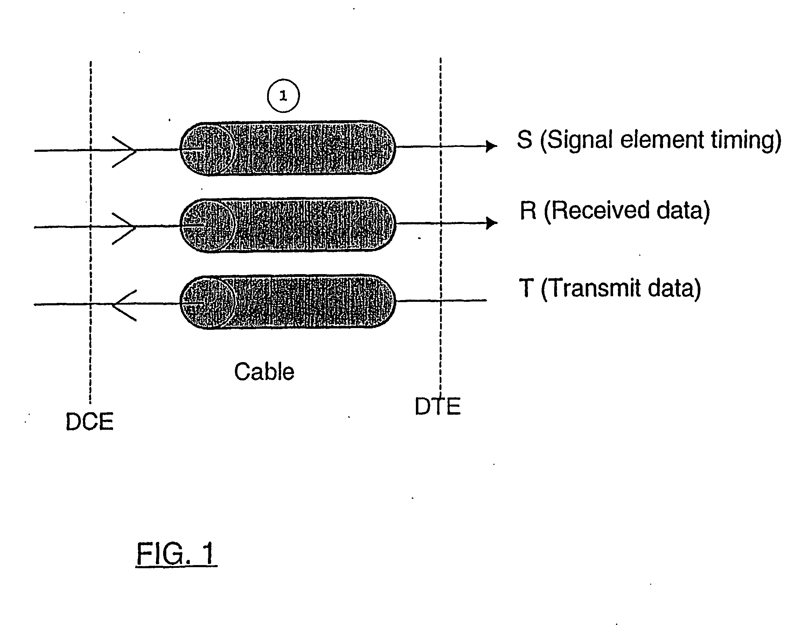

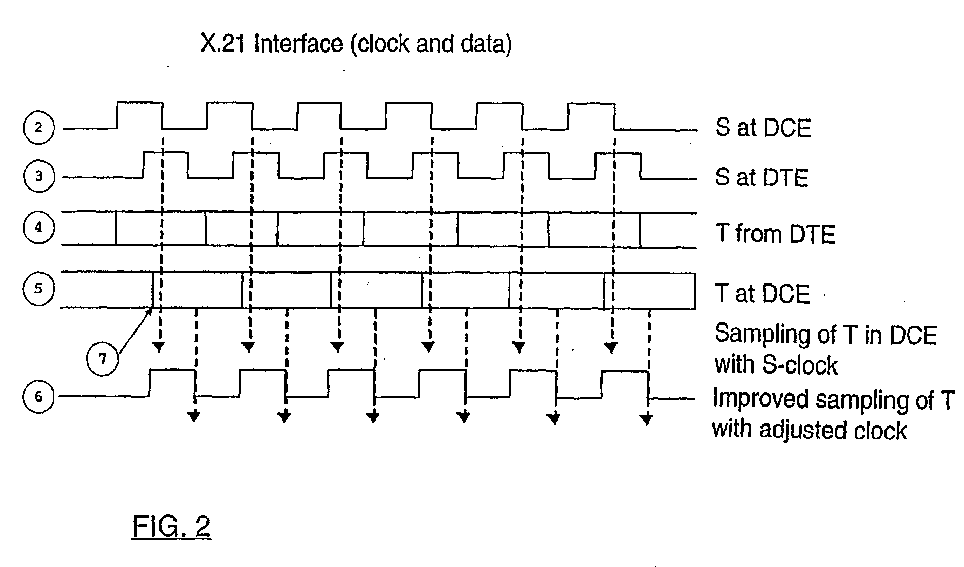

With reference to Fig. 1 and Fig. 2 there will now in the following be described an example of how the method according to the present invention may be implemented.

As stated previously, the invention relates to a method which automatically compensates for the cable delay and makes sure that data is always clocked in the middle of the symbol.

The method uses the transition on the transmitted data (T-circuit on X.21) as a reference for adjusting (resetting) a counter which controls the data sampling.

The transmit data on the DCE-interface is delivered from the DTE with reference to the S-circuit (signal element timing) but with the mentioned cable delay. By clocking the data of the T-circuit into a buffer with the variable phase clock and clocking out with reference to the S-clock, error free operation is secured independent of delay.

### ADVANTAGES

The described invention makes it possible to use the X.21 interface for high bit-rates on long cables. Installation work and operational uncertainties are eliminated and standard X.21 can be used.

### BROADENING

The principle can be used for any synchronous interface with contra-directional timing.

## Claims

1. Method for compensation of cable delay of transmitted data signals (5) between data communication equipment and data transmission equipment, where the data communication equipment includes a counter adjusted to control a data sampling at the data communication equipment
**characterized in that** the data communication equipment and the data transmission equipment is adapted to communicate over a X.21 interface where the method further comprises the steps of:
a) receiving data (4) at the data communication equipment, said data (4) is synchronized with an arbitrarily delayed clock signal (3) where the arbitrarily delayed clock signal is transmitted from the data communication equipment and received at the data transmission equipment, and
b) receiving the transmitted data (5) at the data communication equipment,
c) at the data communication equipment clocking the transmitted data (5) into a buffer,
d) resetting the counter at the data communication equipment using transitions (7) in the transmitted data (5) as a reference, and
e) sampling the transmitted data (5) at the data communication equipment controlled by the reset counter.

2. Method as defined in claim 1,
**characterized in that** step c further comprises that the transmitted data (4) at the data communication equipment are clocked into said buffer utilizing a variable phase clock, and are clocked out from the buffer with reference to said arbitrarily delayed clock signal (3).

## Patentansprüche

1. Verfahren zum Ausgleichen von Kabellaufzeit übertragener Datensignale (5) zwischen einer Datenkommunikationsausstattung und einer Datenübertragungsausstattung, wobei die Datenkommunikationsausstattung einen Zähler aufweist, der ein Datenabtasten an der Datenkommunikationsausstattung steuern kann, **dadurch gekennzeichnet, dass** die Datenkommunikationsausstattung und die Datenübertragungsausstattung über eine X.21-Schnittstelle kommunizieren können, wobei das Verfahren ferner die folgenden Schritte aufweist:
a) Empfangen von Daten (4) an der Datenkommunikationsausstattung, wobei die Daten (4) mit einem willkürlich verzögerten Taktsignal (3) synchronisiert sind, wobei das willkürlich verzögerte Taktsignal von der Datenkommunikationsausstattung übertragen und an der Datenübertragungsausstattung empfangen wird, und
b) Empfangen der übertragenen Daten (5) an der Datenkommunikationsausstattung,
c) an der Datenkommunikationsausstattung Takten der übertragenen Daten (5) in einen Pufferspeicher,
d) Rückstellen des Zählers an der Datenkommunikationsausstattung unter Einsatz von Wechseln (7) in den übertragenen Daten (5) als eine Referenz, und
e) Abtasten der übertragenen Daten (5) an der Datenkommunikationsausstattung, die von dem Reset-Zähler gesteuert wird.

2. Verfahren nach Anspruch 1, **dadurch gekennzeichnet, dass** Schritt c) ferner aufweist, dass die übertragenen Daten (4) an der Datenkommunikationsausstattung in den Pufferspeicher getaktet werden, indem ein Taktgeber mit variabler Phase verwendet wird, und dass sie aus dem Pufferspeicher unter Bezugnahme auf das willkürlich verzögerte Taktsignal (3) heraus getaktet werden.

## Revendications

1. Procédé de compensation du retard sur le câble de signaux de données transmis (5) entre un équipement de communication de données et un équipement de transmission de données, dans lequel l'équipement de communication de données comprend un compteur conçu pour commander un échantillonnage des données sur l'équipement de communication de données,
**caractérisé en ce que** l'équipement de communication de données et l'équipement de transmission de données sont conçus pour communiquer sur une interface X.21,
le procédé comprenant en outre les étapes consistant à :
a) recevoir des données (4) sur l'équipement de communication de données, lesdites données (4) étant synchronisées avec un signal d'horloge arbitrairement retardé (3), le signal d'horloge arbitrairement retardé étant émis par l'équipement de communication de données et reçu par l'équipement de transmission de données,
b) recevoir les données transmises (5) sur l'équipement de communication de données,
c) sur l'équipement de communication de données, cadencer les données transmises (5) dans une mémoire tampon,
d) réinitialiser le compteur sur l'équipement de communication de données en utilisant comme référence des transitions (7) dans les données transmises (5), et
e) échantillonner les données transmises (5) sur l'équipement de communication de données, contrôlé par le compteur réinitialisé.

2. Procédé selon la revendication 1, **caractérisé en ce que** l'étape c) comprend en outre le fait que les données transmises (4) sur l'équipement de communication de données sont cadencées dans ladite mémoire tampon en utilisant une horloge à phase variable et sont extraites de la mémoire tampon en étant cadencées par référence audit signal d'horloge arbitrairement retardé (3).
